# EUROPEAN PATENT SPECIFICATION

(11) **EP 3 900 806 B1**
(45) Date of publication and mention of the grant of the patent: **22.11.2023**
(21) Application number: 19900122.3
(22) Date of filing: 02.10.2019
(51) Int. Cl.: B01D 39/20, C02F 1/68, C02F 1/28

(54) **HEALTH FUNCTION-CUSTOMIZED NATURAL MINERAL ACTIVATING COMPOSITE FILTER, AND METHOD FOR PRODUCING SAME**
AN GESUNDHEITSFUNKTIONEN ANGEPASSTER NATÜRLICHER MINERALSTOFFAKTIVIERENDER VERBUNDFILTER UND VERFAHREN ZU SEINER HERSTELLUNG
FILTRE COMPOSITE D'ACTIVATION MINÉRALE NATURELLE PERSONNALISÉ EN FONCTION DE LA SANTÉ, ET SON PROCÉDÉ DE PRODUCTION

(30) Priority: 20.12.2018 KR 20180166424
(43) Date of publication of application: 27.10.2021
(73) Proprietor: Kim, Tae-Su, Busan 47603 (KR)
(72) Inventor: Kim, Tae-Su, Busan 47603 (KR)
(74) Representative: Sach, Greg Robert
(86) International application number: PCT/KR2019/012946
(87) International publication number: WO 2020/130302

(56) References cited:
- KR-A- 20040 007 443
- KR-A- 20050 024 481
- KR-A- 20080 087 952
- KR-A- 20180 117 320
- KR-B1- 100 903 038
- KR-B1- 102 027 993

## Description

### Technical Field

The present invention provides a composite filter for water purification that is capable of improving the contents of natural minerals and a method for producing the same.

### Background Art

In general, tap water that is supplied to each household is taken from the water system of each river through an intake station, and contaminated water is purified and supplied to each household through a water supply pipe.

However, the water supply pipe is also severely corroded due to lack of management and contaminated water, and even if a large amount of a disinfectant chemical is used in the water purification process, a problem arises in that discomfort is caused due to due to bad smell when water is drunk without separate treatment. In addition, a problem may arise in that carcinogenic substances such as chloroform, bromoform and trihalomethane, which are by-products of disinfection, are generated by the reaction of chlorine used in the water purification plant with organic matter.

Accordingly, there is a general tendency to drink bottled water or to drink purified tap water. For example, the purified water is produced using a reverse osmosis water purifier which includes a water tank made of synthetic resin and purifies water by a fine filter. However, the above-described water purifier acts to remove *E*. *coli* harmful to the human body and to sterilize and deodorize water, but problems arise in that the water purifier removes components (such as minerals) beneficial to the human body and cannot further activate the minerals, thereby damaging health.

Therefore, a process of purifying water is required to prevent the intake of contaminated water, and there have been studies on water purifiers based on reverse osmosis as disclosed in Korean Patent No. 1774576. However, there is a problem in that water purified by the reverse osmosis water purifier has significantly low contents of essential minerals. KR20080087952A and KR2018 0117320A disclose filters comprising organic germanium.

### Disclosure

### Technical Problem

The present invention provides a composite filter that is capable of eluting minerals beneficial to the human body and adjusting the contents of minerals according to their health functions and a method for producing the same.

### Technical Solution

In accordance with one aspect of the present invention, the present invention provides a composite filter including: a filter impregnated with halite; a filter impregnated with calcite; and a filter impregnated with organic germanium-containing ore powder; wherein the filter impregnated with halite, the filter impregnated with calcite, and the filter impregnated with organic germanium-containing ore powder are sequentially stacked.

In accordance with another aspect of the present invention, the present invention provides a method for producing a composite filter, the method including: producing a filter impregnated with organic germanium-containing ore powder, the organic germanium-containing ore powder being produced by mixing an anaerobic fermentation material with germanium-containing ore powder, followed by fermentation at a temperature of 30 to 50°C for 6 to 15 days; and sequentially stacking a filter impregnated with halite and a filter impregnated with calcite on the filter impregnated with organic germanium-containing ore powder.

### Advantageous Effects

The present invention may provide a composite filter which is capable of eluting minerals (such as germanium, strontium, lanthanum, and trivalent chromium) beneficial to the human body and producing purified water, and a method for producing the same. Furthermore, it may be possible to adjust the contents of activated natural minerals according to their health functions by adjusting the contents of filter materials.

### Description of Drawings

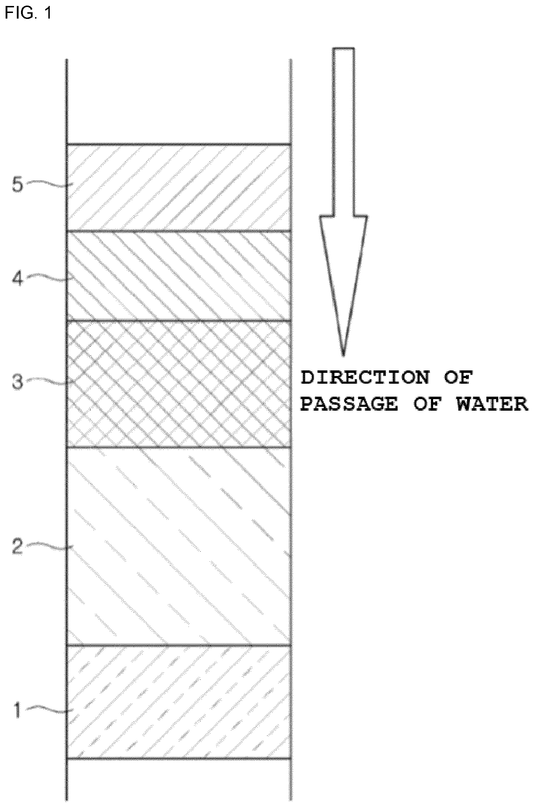

FIG. 1 shows an exemplary filter that may be used as a composite filter of the present invention.

### Mode for Invention

Hereinafter, preferred embodiments of the present invention will be described with reference to the accompanying drawings. However, the embodiments of the present invention may be modified in various different forms, and the scope of the present invention is not limited to the embodiments described below.

The present invention provides a composite filter capable of eluting components (such as such as germanium, strontium, lanthanum, and trivalent chromium), which may provide beneficial effects to the human body, into water during a water purification process, and a method for producing the same.

Specifically, the present invention provides a composite filter which is produced by: converting a germanium-containing natural ore into organic germanium by fermentation; using the organic germanium as a part of the filter material so that germanium may be eluted into water during a water purification process; and using halite and halite as a part of the filter material so that the contents of mineral ions in water may be increased during the water purification process. The germanium-containing natural ore may be, for example, granite.

Therefore, the present invention provides a composite filter including: a filter impregnated with halite; a filter impregnated with calcite; and a filter impregnated with organic germanium-containing ore powder, wherein the filter impregnated with halite, the filter impregnated with calcite, and the filter impregnated with organic germanium-containing ore powder are sequentially stacked.

Natural ore may be used as a source of the organic germanium-containing ore. The natural ore is not particularly limited, as long as it contains germanium and may be suitably used in the present invention. This ore containing germanium may be, for example, granite.

Meanwhile, the calcite and the halite serve to increase the contents of mineral ions in water. As water passes through the calcite and halite, components such as calcium, magnesium, potassium, sodium, strontium, lanthanum and chromium trivalent may be eluted into water.

The composite filter of the present invention may further include activated carbon, silver activated carbon, or a mixture thereof. The activated carbon and the silver activated carbon serve to remove the odor of water and remove impurities, and any activated carbon and silver activated carbon, which are generally used in water purifiers, may be used without limitation. For example, silver activated carbon capable of removing chlorine (Cl) may be used.

Therefore, the composite filter of the present invention may use water that passed through activated carbon, silver activated carbon, or a mixture thereof.

Meanwhile, although the contents of the ore powder, calcite and halite are not limited, the composite filter may include ore powder, calcite and halite at a weight ratio of 1:6:1 to 1 :4:2. If the contents of the ore powder, calcite and halite are excessively high, a problem may arise in that the amount of minerals in purified water excessively increases, and thus the minerals are taken in excessive amounts when the purified water is drunk, and if the contents of the ore powder, calcite and halite are low, a problem may arise that the contents of minerals in purified water are insignificant. For example, 50 g of the ore powder, 200 g of calcite and 60 g of halite may be used. Thus, by adjusting the content of the ore powder, calcite and halite, it is possible to provide a health function-specific natural mineral-activating composite filter capable of adjusting the contents of desired minerals in water.

Furthermore, the present invention provides a method for producing the composite filter.

Specifically, the present invention provides a method for producing a composite filter, the method including steps of: producing a filter impregnated with organic germanium-containing ore powder, the organic germanium-containing ore powder being produced by mixing an anaerobic fermentation material with germanium-containing ore powder, followed by fermentation at a temperature of 30 to 50°C for 6 to 15 days; and sequentially stacking or connecting a filter impregnated with halite and a filter impregnated with calcite onto the filter impregnated with organic germanium-containing ore powder.

Specifically, the natural ore used as a germanium source is ground to provide germanium-containing ore powder. The present invention is intended to ferment germanium contained in the ore. To facilitate fermentation of the germanium, the ore is preferably ground before use.

Although grinding of the ore is not particularly limited, the ore is preferably ground to an average particle size of 100 to 500 mesh. A smaller size of the ore particles is more desirable for fermentation, but is not preferable because a lot of effort and cost is required for grinding. In addition, a larger particle size of the ground ore is not preferable because fermentation efficiency is lowered and more time is required for fermentation. For these reasons, it is more preferable to grind the ore to have a particle size within the above range.

Furthermore, the method includes a step of adding and mixing an anaerobic fermentation material with the ore powder and then fermenting the mixture. The anaerobic fermentation material is not particularly limited as long as it may convert germanium contained in the ore into organic germanium. For example, the anaerobic fermentation material may be at least one yeast selected from the group consisting of raw yeast, active dry yeast, and instant yeast.

The anaerobic fermentation material may be added in an amount of 5 to 50 parts by weight based on 100 parts by weight of the germanium-containing ore. If the anaerobic fermentation material is added in an amount of less than 5 parts by weight, germanium contained in the ore may not be sufficiently fermented, and even if the anaerobic fermentation material is added in an amount of more than 50 parts by weight, it does not contribute to additional improvement in the fermentation effect. Preferably, the anaerobic fermentation material may be added in an amount of 5 to 20 parts by weight.

After the anaerobic fermentation material is added to and mixed with the ore powder, the mixture is fermented at a temperature of 30 to 50°C for6 to 15 days. Performing fermentation under the above-described temperature and time conditions is preferable for producing organic germanium by fermenting germanium present in the ore. In particular, if the fermentation temperature is lower than 30°C, a problem arises in that the growth of the anaerobic fermentation material is not active, and if the fermentation temperature is 50°C or higher, a problem arises in that the anaerobic fermentation material die and fermentation does not occur well.

After the fermentation is performed, drying is performed at 100 to 120°C for 1 to 2 hours. The drying may be performed without limitation as long as it does not change the properties of organic germanium. For example, the drying may be performed in an oven.

In this fermentation process, germanium in the ore powder is fermented by the fermentation material and converted into organic germanium. When the organic germanium is contained, for example, in the filter, the organic germanium may be eluted during a water purification process to provide water containing organic germanium.

Furthermore, the organic germanium-containing ore powder may be applied to the filter material. In addition, calcite or halite with a particle size of 2 to 3 mm may be applied to the filter material. The calcite or halite may be used with a particle size similar to that of the organic germanium-containing ore powder.

The filter material is not particularly limited, as long as it is generally used and may be suitably used in the present invention. Examples of the filter material include nonwoven fabric, activated carbon, zeolite, ceramic balls, granite, and natural mineral ore.

Application of organic germanium-containing ore powder, calcite or halite to the above-described filter material may be performed, for example, by filling a filter cartridge with the organic germanium-containing ore powder, calcite or halite together with a porous substrate, or repeating a process of dispersing the organic germanium-containing ore powder, calcite or halite on a single porous substrate and stacking another porous substrate thereon. The filters may be produced by a method of impregnating the organic germanium-containing ore powder, calcite or halite into the pores of activated carbon.

At this time, if necessary, it is also possible to apply a method of dispersing the organic germanium-containing ore powder, calcite or halite in a binder and then applying the dispersion to the surface of the filter material. In addition, various known methods may also be applied.

Meanwhile, it is possible to obtain filters in which organic germanium-containing ore powder, calcite or halite is impregnated on the surface of the filter material in the same manner as described above, and it is possible to produce a composite filter by sequentially stacking or connecting the filters together. For example, the filter impregnated with organic germanium-containing ore powder, the filter impregnated with calcite, and the filter impregnated with halite may be sequentially stacked or connected.

That is, the composite filter of the present invention is intended for water purification treatment, and water to be purified flows into the side of the filter impregnated with halite and is discharged through the filter impregnated with organic germanium-containing ore powder. Water purified by the composite filter according to the present invention is not only free of impurities as a result of water purification, but also contains activated natural minerals, and thus may provide beneficial effects on health when drunk.

Furthermore, the composite filter obtained by the above-described method may produce purified water contain minerals (such as germanium, strontium, lanthanum and trivalent chromium) beneficial to the human body, which have been eluted in the water purification process. Furthermore, since the minerals eluted in the water purification process are in the form of ions, they may be absorbed into the human body in an activated state when the water is drunk.

Hereinafter, the present invention will be described in more detail with reference to specific examples. The following examples serve only to help the understanding of the present invention, and the scope of the present invention is not limited thereto.

### Example 1

400 g of granite was ground to obtain granite powder having an average particle size of 100 to 500 mesh.

35 g of an anaerobic fermentation material was added to the granite powder and stirred for 60 minutes to be homogeneously mixed.

Then, the mixture of the granite and the anaerobic fermentation material was placed in a reactor and fermented at 36 to 40°C for 6 days.

The fermented mixture was dried at 110°C for 1 hour to obtain organic germanium-containing granite powder.

50 g of the organic germanium-containing granite powder was uniformly impregnated on and/or into a nonwoven fabric substrate to produce a filter impregnated with the organic germanium-containing granite powder.

Filters impregnated with calcite, halite, activated carbon and silver activated carbon, respectively, were produced and sequentially stacked on the filter impregnated with the organic germanium-containing granite powder as shown in FIG. 1, thereby producing a composite filter.

During production, about 200 g of the calcite was uniformly impregnated on and/or into a nonwoven fabric substrate, and about 60 g of the halite was uniformly impregnated on and/or into a nonwoven fabric substrate. 20 g of each of the active carbon and the silver activated carbon was uniformly impregnated on and/or into a nonwoven fabric substrate.

### Experimental Example 1

Water (in which germanium, strontium, lanthanum, trivalent chromium were not detected) was passed through the composite filter.

Thereafter, the components of the purified water were analyzed. The water was passed sequentially through the silver activated carbon filter, the activated carbon filter, the halite filter, the calcite filter and the filter impregnated with organic germanium-containing granite powder. The analyzed components of the water are summarized in Table 1 below.

**[Table 1]**

| Component | Concentration |
|---|---|
| Calcium (Ca) | 26 mg/L |
| Magnesium (Mg) | 5.9 mg/L |
| Potassium (K) | 0.05 mg/L |
| Sodium (Na) | 15 mg/L |
| Zinc (Zn) | 0.6 mg/L |
| Germanium (Ge) | 2.05 mg/L |
| Iron (Fe) | 10 mg/L |
| Manganese (Mn) | 0.1 mg/L |
| Cobalt (Co) | 0.1 mg/L |
| Copper (Cu) | 0.2 mg/L |
| Silicon (Si) | 11.5 mg/L |
| Strontium (Sr) | 100 µg/L |
| Lanthanum (La) | 0.15 µg/L |
| Trivalent chromium (Cr) | 2.06 mg/L |

As shown in Table 1 above, germanium was detected in the water in which germanium was not detected before passage through the composite filter, and components such as strontium, lanthanum, and trivalent chromium, which are not contained in common water, were detected. Thus, the composite filter may produce water capable of providing beneficial effects to the human body. Although the embodiments of the present invention have been described in detail, the scope of the present invention is not limited thereto, and it will be apparent to those skilled in the art that various modifications and variations are possible, without departing from the scope of the appended claims.

### [Description of reference numerals]

1: filter impregnated with organic germanium-containing ore powder
2: filter impregnated with calcite
3: filter impregnated with halite
4: filter impregnated with activated carbon
5: filter impregnated with silver activated carbon

## Claims

1. A composite filter comprising:
a filter impregnated with halite;
a filter impregnated with calcite; and
a filter impregnated with organic germanium-containing ore powder;
wherein the filter impregnated with halite, the filter impregnated with calcite, and the filter impregnated with organic germanium-containing ore powder are sequentially stacked.

2. The composite filter of claim 1, wherein the organic germanium-containing ore powder is produced by fermenting granite with an anaerobic fermentation material.

3. The composite filter of claim 1, further comprises activated carbon, silver activated carbon, or a mixture thereof.

4. The composite filter of claim 1, wherein the filters comprise organic germanium-containing ore powder, calcite and halite at a weight ratio of 1:6:1 to 1:4:2.

5. A method for producing a composite filter, the method comprising:
producing a filter impregnated with organic germanium-containing ore powder, the organic germanium-containing ore powder being produced by mixing an anaerobic fermentation material with germanium-containing ore powder, followed by fermentation at a temperature of 30 to 50°C for 6 to 15 days; and
sequentially stacking a filter impregnated with calcite on the filter impregnated with organic germanium-containing ore powder, and a filter impregnated with halite on the filter impregnated with calcite.

6. The method of claim 5, wherein the organic germanium-containing ore powder has an average particle size of 25 µm (500 mesh) to 149 µm (100 mesh).

7. The method of claim 5, wherein the anaerobic fermentation material is at least one yeast selected from the group consisting of raw yeast, active dry yeast, and instant yeast.

## Patentansprüche

1. Verbundfilter, umfassend:
einen mit Halit imprägnierten Filter;
einen mit Calcit imprägnierten Filter; und
einen mit organischem germaniumhaltigem Erzpulver imprägnierten Filter;
wobei der mit Halit imprägnierte Filter, der mit Calcit imprägnierte Filter, und der mit organischem germaniumhaltigen Erzpulver imprägnierte Filter sequentiell gestapelt sind.

2. Verbundfilter nach Anspruch 1, wobei das organische germaniumhaltige Erzpulver durch die Fermentation von Granit mit einem anaeroben Fermentationsmaterial hergestellt wird.

3. Verbundfilter nach Anspruch 1, ferner umfassend Aktivkohle, silberimprägnierte Aktivkohle oder eine Mischung davon.

4. Verbundfilter nach Anspruch 1, wobei die Filter organisches germaniumhaltiges Erzpulver, Calcit und Halit in einem Gewichtsverhältnis von 1:6:1 zu 1:4:2 umfassen.

5. Verfahren zur Herstellung eines Verbundfilters, wobei das Verfahren umfasst:
Herstellung eines mit organischem germaniumhaltigem Erzpulver imprägnierten Filters, wobei das organische germaniumhaltige Erzpulver durch Vermischen eines anaeroben Fermentationsmaterials mit germaniumhaltigem Erzpulver hergestellt wird, gefolgt von Fermentation bei einer Temperatur von 30 bis 50°C für 6 bis 15 Tage; und
sequentielles Stapeln eines mit Calcit imprägnierten Filters auf den mit organischem germaniumhaltigen Erzpulver imprägnierten Filter, und eines mit Halit imprägnierten Filters auf den mit Calcit imprägnierten Filter.

6. Verfahren nach Anspruch 5, wobei das organische germaniumhaltige Erzpulver eine durchschnittliche Partikelgröße von 25 µm (500 Mesh) bis 149 µm (100 Mesh) hat.

7. Verfahren nach Anspruch 5, wobei das anaerobe Fermentationsmaterial zumindest eine Hefe ist, die aus der Gruppe bestehend aus Rohhefe, Aktivtrockenhefe und Instanthefe ausgewählt wird.

## Revendications

1. Filtre composite comprenant :
un filtre imprégné d'halite ;
un filtre imprégné de calcite ; et
un filtre imprégné de poudre de minerai contenant du germanium organique ;
dans lequel le filtre imprégné d'halite, le filtre imprégné de calcite et le filtre imprégné de poudre de minerai contenant du germanium organique sont empilés séquentiellement.

2. Filtre composite selon la revendication 1, dans lequel la poudre de minerai contenant du germanium organique est produite par fermentation de granit avec un matériau de fermentation anaérobie.

3. Filtre composite selon la revendication 1, comprenant en outre du charbon actif, du charbon actif imprégné d'argent ou un mélange de ceux-ci.

4. Filtre composite selon la revendication 1, dans lequel les filtres comprennent de la poudre de minerai contenant du germanium organique, de la calcite et de l'halite selon un rapport en poids allant de 1:6:1 à 1:4:2.

5. Procédé de production d'un filtre composite, le procédé comprenant :
la production d'un filtre imprégné de poudre de minerai contenant du germanium organique, la poudre de minerai contenant du germanium organique étant produite par le mélange d'un matériau de fermentation anaérobie avec de la poudre de minerai contenant du germanium, suivi d'une fermentation à une température de 30 °C à 50 °C pendant 6 à 15 jours; et
l'empilage séquentiellement d'un filtre imprégné de calcite sur le filtre imprégné de poudre de minerai contenant du germanium organique, et d'un filtre imprégné d'halite sur le filtre imprégné de calcite.

6. Procédé selon la revendication 5, dans lequel la poudre de minerai contenant du germanium organique a une taille moyenne de particules de 25 µm (500 mesh) à 149 µm (100 mesh).

7. Procédé selon la revendication 5, dans lequel le matériau de fermentation anaérobie est au moins une levure choisie dans le groupe constitué de levure brute, levure sèche active et levure instantanée.
